Europäisches Patentamt

European Patent Office

Office européen des brevets

(11) Veröffentlichungsnummer: **0 054 148**
**A2**

# (12) EUROPÄISCHE PATENTANMELDUNG

(21) Anmeldenummer: 81108808.7

(22) Anmeldetag: 23.10.81

(51) Int. Cl.³: **C 08 F 255/06**

(30) Priorität: 16.12.80 DE 3047295

(43) Veröffentlichungstag der Anmeldung:
23.06.82 Patentblatt 82/25

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Hambrecht, Juergen, Dr.
An der Steige 12
D-6903 Neckargemuend-Dilsberg(DE)

(72) Erfinder: Gausepohl, Hermann, Dr.
Neuweg 10
D-6704 Mutterstadt(DE)

(72) Erfinder: Gerberding, Karl, Dr.
In der Dreispitz 9
D-6706 Wachenheim(DE)

(72) Erfinder: Echte, Adolf, Dr.
Leuschnerstrasse 42
D-6700 Ludwigshafen(DE)

(54) Verfahren zur kontinuierlichen Herstellung alterungsbeständiger AES-Polymerisate.

(57) Die Erfindung betrifft ein Verfahren zur kontinuierlichen Herstellung von alterungsbeständigen AES-Polymerisaten. Dazu wird ein Gemisch aus einem vinylaromatischen Monomeren und einem copolymerisierbaren ethylenisch ungesättigten Monomeren in Gegenwart eines ungesättigten Terpolymerisats aus Ethylen, Propylen und einem nicht konjugierten Dien als Kautschuk, eines Radikalinitiators und gegebenenfalls einem Lösungsmittel, einem Kettenüberträger oder anderen Hilfs- und Zusatzstoffen bei Temperaturen im Bereich von 80 bis 200°C in mindestens zwei isotherm betriebenen Reaktions-Zonen unter Rühren polymerisiert. Dabei wird in der ersten Reaktionszone bis zu einem Mindestumsatz, $U_{mind}$ von $\leqslant$ K [K = Kautschukmenge) in Gew.%, bezogen auf Monomere] bei Verweilzeiten der Reaktanten bis zu $\leqslant$ 35 Minuten polymerisiert. Das erhaltene Polymerisat wird in einer Entgasungs, stufe von nicht umgesetzten Monomeren und gegebenenfalls von Lösungsmitteln befreit und diese werden in den Prozeß zurückgeführt.

Die Formmassen können zur Herstellung von Formteilen verwendet werden.

BASF Aktiengesellschaft                    O.Z.0050/034821

Verfahren zur kontinuierlichen Herstellung alterungsbeständiger AES-Polymerisate
_____

Die Erfindung betrifft ein kontinuierliches Verfahren zur
Herstellung von alterungs- und witterungsbeständigen
AES-Polymerisaten in Masse oder Lösung in Gegenwart von
Radikalinitiatoren und gegebenenfalls von Kettenüberträgern, wobei die Polymerisation im üblichen Temperaturbereich in isothermbetriebenen Reaktionszonen durchgeführt
wird und das erhaltene Polymerisat auf üblichem Wege aufgearbeitet wird.

AES-Polymerisate sind thermoplastische Zweiphasenkunststoffe, in denen Acrylnitril (A) und Styrol (S) auf einen
EPDM-Kautschuk (E) pfropfpolymerisiert sind. EPDM-Kautschuke sind Terpolymere aus Äthylen (E), Propylen (P) und
einem nichtkonjugierten Dien (D). AES-Polymerisate sind
grundsätzlich bekannt. Bisher bekannt gewordene Herstellungsverfahren sind jedoch technisch sehr aufwendig, teilweise auf bestimmte EPDM-Kautschuke beschränkt und die
resultierenden AES-Polymerisate sind entsprechenden
ABS-Polymerisaten in einem weiten Teil des Eigenschaftsspektrums unterlegen.

Zum Stand der Technik nennen wir:

(1) DE-OS 25 33 991
(2) DE-OS 20 48 557
(3) DE-OS 22 62 610
(4) DE-OS 26 03 758
(5) DE-OS 21 40 905
(6) DDR-PS 124 527
(7) US-PS 3 396 311
(8) US-PS 3 868 434

Vo/BL

(9) DE-OS 17 70 392
(10) DE-OS 26 59 175
(11) DE-OS 26 13 352

Es ist bekannt, daß EPDM-Kautschuke in Mischungen aus Styrol und Acrylnitril nur sehr beschränkt löslich sind. Es wurde deshalb vorgeschlagen, Hilfslösungsmittel bzw. Lösungsmittelgemische zuzusetzen oder in Lösung zu polymerisieren [vgl. (1)]. Die hierfür notwendigen Lösungsmittelmengen sind sehr hoch und bringen Probleme bei der Separierung der Polymerisate und der Lösungsmittelrückgewinnung.

In (2) wird vorgeschlagen, die Löslichkeit durch Zugabe gesondert hergestellter Pfropfpolymerisate von Styrol/Acrylnitril auf EPDM-Kautschuke, die als Öl-in-Öl-Emulgatoren wirken, zu verbessern. Diese Verfahrensvariante hat den Nachteil, daß ein gesonderter Verfahrensschritt für die Herstellung der Pfropfcopolymerisate notwendig ist. Außerdem ist die Wirksamkeit der Pfropfcopolymeren als Emulgator für den Kautschuk von der Pfropfung, d.h. vom Pfropfungsgrad, abhängig.

In (3), (4), (5) und (6) wird die Separierung des unmodifizierten Kautschuks während der Polymerisation durch eine spezielle Temperaturführung, gekoppelt mit einer speziellen Acrylnitrildosierung, unterdrückt. Dies wird beispielsweise dadurch erreicht, daß das Acrylnitril erst allmählich und bei bestimmten Umsätzen in der erforderlichen Menge zugesetzt und/oder nachdosiert wird. Diese Nachdosierung kann zusammen mit anderen Monomeren und/oder Lösungsmitteln erfolgen. Auch diese vorgeschlagenen Lösungswege besitzen eine Reihe von Nachteilen. Beispielsweise entstehen bei einer gestaffelten Acrylnitrilzugabe Pfropfpolymerisate mit sehr unterschiedlicher chemischer Verteilung, was zu Durchmischungsproblemen führen kann. Das Monomerensplitting und die gestaffelte Kautschuklösungs-Dosierung führen ebenfalls zu Durchmischungsproblemen. Häufig scheidet sich eine dicke Elastomerschicht an den Kesselwandungen ab, die nach und nach vernetzt.

Allen beschriebenen Herstellverfahren ist außerdem gemeinsam, daß sie technisch aufwendig und störungsanfällig sind. Außerdem befriedigen die nach den bekannten Verfahren hergestellten AES-Polymerisate zumeist nicht.

Es ist ebenso bekannt, daß für die Eigenschaften schlagfester Styrolpolymerisate die Verankerung der Weichkomponente in Matrixpolymeren von entscheidender Bedeutung ist. Diese Verankerung wird durch die Pfropfung der Matrixbausteine auf den Kautschuk erreicht. Bemühungen, die Pfropfung der als Weichkomponente eingesetzten Kautschuke zu verbessern, wurden mannigfach unternommen. So ist aus (7) und (8) bekannt, die Verknüpfung der Bausteine Kautschuk-Thermoplast in situ, d.h. während der Polymerisation des thermoplastischen Kunststoffes herzustellen. Dabei werden die üblicherweise angewandten Peroxide als Initiatoren eingesetzt.

Der Nachteil der beschriebenen Verfahren ist es, daß man wegen polymerisationstechnischer Schwierigkeiten, wie einer unzureichenden Wärmeabfuhr oder einer zu hohen Lösungsviskosität oder einer vorzeitigen Vernetzung des Kautschuks bei hohen Temperaturen, nur kleine Initiatorkonzentrationen verwenden kann [vgl. (10)], bzw. bei üblichen Initiatorkonzentrationen nur mit relativ niedrigen Temperaturen arbeiten kann [vgl. (7) und (8)]. Dies führt dazu, daß der Pfropf-Grad zu niedrig liegt, um Produkte mit speziellen Eigenschaften, beispielsweise mit sehr hohem mechanischem Niveau herzustellen.

In (11) ist beschrieben, die Pfropfung des Kautschuks dadurch zu erhöhen, daß man die Polymerisation in der Anfangsphase adiabatisch führt (vgl. Beispiel 1). Eine gute Pfropfung wird mit dieser Methode zwar erreicht, jedoch bietet die Übertragung in den technischen Maßstab wegen der unkontrollierten Reaktion unüberwindliche Schwierigkeiten. Deshalb ist in (11) schon vorgeschlagen, den hohen Pfropfgrad in einem Rohrreaktor durch radikalische Initiierung und bei hoher Temperatur isotherm herzustellen. Jedoch zeigten spätere Versuche, daß die Standzeiten eines solchen Rohr-Reaktors sehr kurz sind; er wächst innerhalb von 1 - 2 Tagen mit vernetztem Material zu.

Aufgabe der vorliegenden Erfindung war es daher, ein Verfahren zu finden, das bei ausreichender Pfropfung des Kautschuks die erwähnten Schwierigkeiten, wie das Ausfällen des Kautschuks durch Monomermischungen aus Styrol und Acrylnitril, die mangelnde Wärmeabfuhr, vorzeitige Vernetzung des Kautschuks oder Anwachsungen im Reaktor, vermeidet und das sich in den technischen Maßstab übertragen läßt. Das Verfahren sollte außerdem gewährleisten, daß die Komponenten $a_1 + a_2 + a_3 + a_4$, gegebenenfalls auch $a_5 + a_6 + a_7$, nicht in gestaffelten Anteilen den Polymerisationszonen zugeführt werden müssen.

Die Lösung dieser Aufgabe erfolgt durch die im Patentanspruch 1 genannten Maßnahmen.

Die kontinuierliche Herstellung von mit Kautschuk modifizierten Polymerisaten von Vinylaromaten ist insbesondere in (9) hinreichend beschrieben (vgl. das Verfahrensprinzip Kessel--Turm-Kaskade), so daß bezüglich der Durchführung des kontinuierlichen Verfahrens auf diese Druckschrift und auf den darin abgehandelten Stand der Technik verwiesen werden kann. Die kontinuierliche Herstellung von ABS-Polymerisaten in zwei oder mehr Reaktionszonen ist dem Fachmann an sich von der Herstellung schlagfester Polymerisate des Styrols bekannt (vgl. US-PS 3 243 481 Kessel-Turmkaskade bzw. Kessel und liegender Reaktor US-PS 3 903 202). Das Verfahren wird im Temperaturbereich von 80 bis 180°C durchgeführt; in der Entgasungsstufe werden gegebenenfalls höhere Temperaturen angewendet. Es ist dem Fachmann bekannt, welche Temperaturen in welcher Reaktionszone anzuwenden sind, um die gewünschten Produkte bzw. Produkteigenschaften einzustellen.

Als monomere aromatische Vinylverbindungen a1) kommen für das erfindungsgemäße Verfahren Styrol, sowie dessen Derivate, wie $\alpha$-Methylstyrol in Betracht. Die genannten Verbindungen können entweder allein oder im Gemisch miteinander verwendet werden. Bevorzugt wird Styrol allein verwendet.

Als äthylenisch ungesättigte Monomere $a_2$) kommen Acryl- oder Methacrylsäurederivate in Betracht, von denen mindestens eines angewendet wird; bevorzugt wird Acrylnitril allein verwendet. Das Verhältnis der vinylaromatischen Monomeren $a_1$) zu den äthyelnisch ungesättigten Monomeren $a_2$) im Gemisch kann im Gewichtsverhältnis von 80:20 bis 50:50 vorliegen. Besonders bevorzugt sind Gewichtsverhältnisse von Styrol im Bereich von 60 bis 80 und entsprechend 40 bis 20 Gewichtsprozent Acrylnitril.

Als kautschukartige Polymerisate $a_3$) kommen EPDM-Kautschuke in Betracht. Sie sind aus Ethylen, Propylen und einem nichtkonjugierten Dien aufgebaut. Das Gewichtsverhältnis Ethylen/Propylen ist bevorzugt 75:25 bis 40:60. Das Dien ist in solchen Mengen und in solcher Form im Copolymerisat eingebaut, daß Jodzahlen von 2 - 30 gemessen werden, entsprechend ca. 1 - 15 C-C-Bindungen pro 1000 C-Atome. Die Monomerbausteine können statistisch oder in Blöcken angeordnet sein.

**0054148**

Statt eines Diens können auch Mischungen aus mehreren Dienen einpolymerisiert sein.

Mischungen eines EPDM-Kautschuks mit anderen Kautschuken mit weniger als 50 C-C-Bindungen pro 1000 C-Atome sind ebenfalls erfindungsgemäß einsetzbar. Alle nicht konjugierten Diene sind als Comonomere grundsätzlich verwendbar. Bevorzugte Diene sind: Dicyclopentadien, Hexadien-(1,4) und 5-Äthylidennorbornen, Tricyclopentadien, Heptadien, Octadien usw.

Besonders bevorzugt werden EPDM-Kautschuke einer Mooney-Plastizität (ML 1+4', ($100^{o}$C)) von 20 - 90.

Die EPDM-Kautschuke werden in Mengen von vorzugsweise 5 bis 30 Gew.-% bezogen auf Monomere $a_1$) und $a_2$) eingesetzt.

Als Radikalinitiatoren $a_4$) kommen insbesondere Alkyl- oder Acylperoxide in Frage. Bevorzugt werden Dibenzylperoxid, Tertiär-butylperoctoat, Tertiär-butylperbenzoat oder Di--tert.butylperoxid in Mengen von 0,05 bis 0,5 Gew.-%, bezogen auf Monomere $a_1$) und $a_2$) angewendet.

Das erfindungsgemäße Verfahren kann sowohl in Masse als auch in Lösung durchgeführt werden. Bei der Polymerisation in Masse wird der Kautschuk in dem zu polymerisierenden vinylaromatischen Monomeren gelöst und unter Zugabe von Initiatoren und/oder Reglern zusammen mit der Komponente $a_2$), in die 1. Polymerisationszone unter starkem Rühren dosiert.

Falls die Polymerisation in Lösung durchgeführt wird, kommen als geeignete Lösungsmittel $a_5$) Toluol, Xylol, Ethylbenzol, Methylethylketon oder Tetrahydrofuran in Frage. Die genannten Lösungsmittel werden in Mengen von 2 bis 20 Gew.-%, bezogen auf vinylaromatisches Monomeres angewendet. Besonders bevorzugt wird Ethylbenzol für das erfindungsgemäße Verfahren.

Als Kettenüberträger $a_6$) kommen die üblicherweise verwendeten Mercaptane mit 14 bis 18 C-Atomen aber auch Kohlenwasserstoffe, wie dimeres $\alpha$-Methyl-Styrol oder Terpinolen und Buten in Betracht. Von den Mercaptanen haben sich besonders das n-Butylmercaptan, das n-Octylmercaptan sowie das n- oder t.-Dodecylmercaptan bewährt. Die Menge an Mercaptan beträgt, falls diese angewendet werden, in der Regel 0,01 bis 0,3 Gew.-%, bezogen auf das vinylaromatische Monomere.

Gegebenenfalls können auch noch die üblichen Zusatz- und Hilfsstoffe $a_7$) hinzugegeben werden. Darunter sind Schmiermittel, Antistatika, Flammschutzmittel, Stabilisatoren, Farbstoffe, organische und anorganische Pigmente und Filler, wie sie üblicherweise beim ABS verwendet werden, zu verstehen.

Die Polymerisationstemperaturen liegen im Bereich von 80 bis 200°C, wenn alle Reaktionszonen berücksichtigt werden. In der Trocknungsstufe bzw. Entgasungsstufe werden sogar höhere Temperaturen angewendet. Das erfindungsgemäße Verfahren wird in mindestens 2 Reaktionszonen durchgeführt, die jeweils isotherm betrieben werden. So ist es möglich, das Verfahren in 2 Reaktionszonen unterschiedlicher Bauart, z.B. einem Rührkesselreaktor und einem Röhrenreaktor durchzuführen. Bevorzugt wird das erfindungsgemäße Verfahren jedoch in mehr als 2 Reaktionszonen, z.B. in einer 2-Kessel-2-Turm-Kaskade durchgeführt. In allen Fällen ist es erforderlich, das Verfahren sowohl in den Kesseln als auch in den Turmreaktoren isotherm durchzuführen. Bevorzugt ist es, die erste Reaktionszone als Rührkessel auszugestalten.

Bezüglich der Durchführung des erfindungsgemäßen Verfahrens in nur 2 Reaktionszonen in Form von liegenden Reaktoren wird auf die US-PS 3 903 202 verwiesen.

Im Prinzip ist es möglich, wie bereits geschildert, die Polymerlösung nach Passieren der 2. Reaktionszone einer üblichen Entgasungszone zuzuführen und sie dort von Restmonomeren und Lösungsmitteln zu befreien. Zweckmäßiger ist es jedoch, den Umsatz in einer oder mehreren weiteren Reaktionszonen die ebenfalls isotherm betrieben werden, jedoch sonst keinen speziellen Kriterien unterliegen, auf mindestens 70 Gew.-% oder höher zu steigern, bevor die Polymerlösung in einer Entgasungszone von vinylaromatischen Monomeren und gegebenenfalls von Lösungsmitteln in an sich bekannter Weise befreit wird.

Wesentlich für die Durchführung des erfindungsgemäßen Verfahrens ist, daß bei isothermer Durchführung der Polymerisation in der ersten Reaktionszone über die Phaseninversion hinweg polymerisiert wird und dabei die Verweilzeit kleiner oder gleich 35 Minuten, vorzugsweise kleiner oder gleich 25 Minuten ist. Diese Bedingungen kann der Fachmann anhand der gegebenen Reaktorgrößen über den Durchsatz festlegen. Als Kriterium für die 1. Bedingung kann der Mindestumsatz $U_{mind.} = K$ gelten, wobei K die Kautschukmenge in Gew.-%, bezogen auf die Summe der Monomeren $a_1) + a_2)$ bedeutet.

Der Vorteil des erfindungsgemäßen Verfahrens besteht darin, daß hohe Pfropfgrade des Kautschuks und hohe Pfropfausbeuten erzielt werden, ohne daß es zu Schwierigkeiten in der Wärmeabfuhr, zu Kesselanwachsungen oder zu vorzeitigen Vernetzungen kommt. Ein weiterer Vorteil besteht darin, daß eine Separierung des Kautschuks durch die Monomerenmischung aus Styrol und Acrylnitril ausbleibt. Die vollständige und der Endzusammensetzung der Hartphase des Polymerisats ent-

0054148

sprechende Monomerendosierung in die erste Reaktionszone gewährleistet bei der erfindungsgemäßen Fahrweise ein chemisch und physikalisch einheitliches Polymerisat das gute Eigenschaften aufweist. Die Rückgewinnung des Lösungsmittels und der nicht umgesetzten Monomeren und damit auch die Abtrennung des Polymerisats kann in bestehenden kontinuierlich arbeitenden Polymerisationsanlagen ohne zusätzlichen Aufwand durchgeführt werden.

Die nach dem erfindungsgemäßen Verfahren erhaltenen Formmassen können nach dem bekannten Verfahren der Thermoplastverarbeitung bearbeitet werden, also z.B. durch Extrudieren, Spritzgießen, Kalandrieren, Hohlkörperblasen, Pressen oder Sintern; besonders bevorzugt werden aus dem nach dem erfindungsgemäßen Verfahren hergestellten Formmassen Formteile durch Spritzgießen hergestellt.

Sie können auch zur Abmischung mit anderen schlagfesten Polymerisaten, die andere Teilchengrößen oder Morphologien besitzen, verwendet werden.

Die in den Beispielen und Vergleichsversuchen aufgeführten Produkteigenschaften wurden wie folgt gemessen:

1. Streckspannung nach DIN 53 445
2. Reißfestigkeit nach DIN 53 445
3. Die Lochkerbschlagzähigkeit, $a_{KL}$, [kJ/m$^2$], wird nach dem DIN-Entwurf auf Beschluß des Fachnormenausschusses Kunststoffe 4.3 vom März 1975, in Vorbereitung, bestimmt.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

Beispiel 1

8 Teile eines handelsüblichen EPDM-Kautschuks werden in 69 Teilen Styrol gelöst und 0,15 Teile t-Dodecylmercaptan hinzugegeben. Dieses Gemisch wird mit einem Zulauf 2, bestehend aus 23 Teilen Acrylnitril und 0,2 Teilen Di.-tert.-butylperoxid, kurz vor der 1. Reaktionszone zusammengeführt und anschließend in einer Kaskade aus vier Reaktoren isotherm polymerisiert. Die beiden ersten Reaktoren bestanden aus Rührkesseln mit einem effektiven Füllvolumen von 1 bzw. 5 Liter. Die beiden weiteren Reaktoren bestanden aus Polymerisationstürmen mit einem Füllvolumen von je 10 Liter. Der Durchsatz betrug 5 l/h und die Temperaturen betrugen im ersten Reaktor $30^{o}$C und im 2. Reaktor $130^{o}$C, bei Umsätzen von 11 % bzw. 25 %. Die Temperaturen in den Turmreaktoren wurden zu $135^{o}$C bzw. $146^{o}$C gewählt. Der Umsatz des Styrols betrug 50 % bzw. 78,4 %. Die Verweilzeit in der ersten Reaktionszone betrug 12 Minuten. Die Polymerlösung nach der ersten Reaktionszone bestand aus einer kohärenten SAN-Phase, gelöst in Styrol und Acrylnitril, und einer dispersen Kautschukphase mit Zellenteilchenmorphologie. Nicht umgesetzte Monomere werden im Vakuum entfernt und zurückgewonnen. Das erhaltene Produkt ist hochschlagzäh und besitzt eine Zellenteilchenmorphologie.

Folgende Eigenschaften wurden gemessen:

Streckspannung:            28 N/mm$^{2}$
Reißfestigkeit:            26 N/mm$^{2}$
Lochkerbschlagzähigkeit: 17 kJ/m$^{2}$

## Beispiel 2

10 Teile eines handelsüblichen EPDM-Kautschukes wurden in 60 Teilen Styrol gelöst und 0,15 Teile t-Dodecylmercaptan hinzugegeben. Die Mischung wird mit 30 Teilen Acrylnitril, das 0,2 Teile Di-tert.-butylperoxid enthielt, vor der 1. Reaktionszone zusammengeführt. Die Polymerisation wurde, wie in Beispiel 1 beschrieben, in einer Reaktionskaskade aus vier Reaktoren durchgeführt.

| Reaktor 1: | Füllvolumen | 1 l |
| | Umsatz | 11,8 % |
| | Temperatur | 128°C |

| Reaktor 2: | Füllvolumen | 1 l |
| | Umsatz | 23,8 % |
| | Temperatur | 130°C |

Der Durchsatz betrug 3,8 l/h. Das Volumen der Reaktoren 3 und 4 betrug 10 l. Die Polymerisationstemperatur wurde bei 140°C und 146°C gehalten. Im letzten Reaktor wurde ein Feststoffgehalt von 85 % bestimmt. Die Verweilzeit in der ersten Reaktionszone betrug 16 Minuten. Das Produkt zeigte eine Zellenteilchenmorphologie und hatte folgende Eigenschaften:

| Streckspannung: | 30 $N/mm^2$ |
| Reißfestigkeit: | 25 $N/mm^2$ |
| Lochkerbschlag-zähigkeit: | 24 $kJ/m^2$ |

## Beispiel 3

Das Beispiel 1 wurde wiederholt. Anstelle von Di-tert.-butylperoxid wurde die gleiche Menge Tert.-butylperbenzoat eingesetzt. Der Durchsatz wurde auf 3,8 l/h reduziert, was

einer Verweilzeit von 16 Minuten in der ersten Reaktionszone entspricht.

Reaktor 1:        Füllvolumen    1 l
                  Umsatz         13,4 %
                  Temperatur     115°C

Reaktor 2:        Füllvolumen    5 l
                  Umsatz         30,1 %
                  Temperatur     120°C

Die Temperaturen in den Reaktoren 3 und 4 betrugen 130°C bzw.
144°C. Es wurde bis zu einem Feststoffgehalt von 86 % polymerisiert. Das erhaltene Polymerisat zeigte eine Zellenteilchenmorphologie und besaß folgende Eigenschaften:

Streckspannung:     27 N/mm$^2$
Reißfestigkeit:     25 N/mm$^2$
Lochkerbschlagzähigkeit:          18 kJ/m

Vergleichsversuch 1

Beispiel 1 wurde wiederholt, wobei der Durchsatz auf 1,5 l/h
reduziert und damit die Verweilzeit auf 40 Minuten erhöht
wurde. Alle anderen Verfahrensparameter wurden gemäß Beispiel 1 beibehalten. Das erhaltene Produkt zeigte folgende
Eigenschaften:

Streckspannung:     32 N/mm$^2$
Reißfestigkeit:     21 N/mm$^2$
Lochkerbschlagzähigkeit:          9 kJ/m$^2$

Vergleichsversuch 2

Beispiel 1 wurde wiederholt, wobei in der ersten Reaktionszone bis zu einem Umsatz von 7,5 % gefahren wurde. Dieser Wert des Umsatzes beinhaltet (bei einem Kautschukgehalt von 8 %), daß die Phaseninvasion noch nicht abgeschlossen war. Der Kautschuk flockte aus, der Polymerisationskessel zeigte bereits nach wenigen Stunden starke Anwachsungen, so daß kein homogenes AES-Polymerisat erhalten werden konnte.

0054148

Patentansprüche

1. Verfahren zur kontinuierlichen Herstellung von alterungsbeständigen AES-Polymerisaten durch Polymerisation eines Gemisches aus

$a_1$) mindestens einem vinylaromatischen Monomeren und

$a_2$) mindestens einem copolymerisierbaren ethylenisch ungesättigten Monomeren im Gewichtsverhältnis $a_1 : a_2$ von 80:20 bis 50:50

in Gegenwart

$a_3$) mindestens eines ungesättigten Terpolymerisats aus Ethylen, Propylen und einem nicht konjugierten Dien in einem Anteil von 3 bis 35 Gew.-%, bezogen auf die Summe der Monomeren $a_1$) und $a_2$),

$a_4$) mindestens einem Radikalinitiator und

$a_5$) gegebenenfalls einem Lösungsmittel

$a_6$) gegebenenfalls einem Kettenüberträger

$a_7$) gegebenenfalls anderen Hilfs- und Zusatzstoffen

indem man bei Temperaturen im Bereich von 80 bis 200°C in mindestens zwei isotherm betriebenen Reaktions-Zonen unter Rühren polymerisiert, das erhaltene Polymerisat in einer Entgasungsstufe von nicht umgesetzten Monomeren und gegebenenfalls von Lösungsmitteln befreit und diese in den Prozeß zurückführt,

dadurch gekennzeichnet, daß in der ersten Reaktionszone bis zu einem Mindestumsatz, $U_{mind}$ von $\geq$ K [K = Kautschukmenge $a_3$) in Gew.-%, bezogen auf $a_1 + a_2$)] bei Verweilzeiten der Reaktanten bis zu $\leq$ 35 Minuten polymerisiert wird.

2.  Verwendung der Formmassen gemäß Anspruch 1 zur Herstellung von Formteilen.

3.  Formteile aus Formmassen gemäß Anspruch 1.